# EUROPEAN PATENT SPECIFICATION

(11) **EP 1 659 888 B1**
(45) Date of publication and mention of the grant of the patent: **06.04.2011**
(21) Application number: 04763988.5
(22) Date of filing: 11.08.2004
(51) Int. Cl.: A23L 3/3436

(54) **OXYGEN-SCAVENGING COMPOSITIONS AND THE APPLICATION THEREOF IN PACKAGING AND CONTAINERS**
SAUERSTOFFENTFERNUNGSZUSAMMENSETZUNGEN UND ANWENDUNG DAVON BEI VERPACKUNG UND BEHÄLTERN
COMPOSITIONS DESOXYGENANTES ET LEUR APPLICATION DANS LES EMBALLAGES ET DANS LES BOITES

(30) Priority: 14.08.2003 EP 03425549
(43) Date of publication of application: 31.05.2006
(73) Proprietor: Cobarr S.r.l., 15057 Tortona (AL) (IT)
(72) Inventor: AL GHATTA, Hussain, I-03014 Fiuggi (Frosinone) (IT)
(74) Representative: Gerbino, Angelo
(86) International application number: PCT/EP2004/008982
(87) International publication number: WO 2005/016762

(56) References cited:
- US-A- 5 744 056
- PATENT ABSTRACTS OF JAPAN vol. 1999, no. 08, 30 June 1999 (1999-06-30) & JP 11 080555 A (KISHIMOTO AKIRA), 26 March 1999 (1999-03-26)
- PATENT ABSTRACTS OF JAPAN vol. 2002, no. 07, 3 July 2002 (2002-07-03) & JP 2002 080647 A (MITSUBISHI GAS CHEM CO INC), 19 March 2002 (2002-03-19)
- PATENT ABSTRACTS OF JAPAN vol. 015, no. 072 (C-0808), 20 February 1991 (1991-02-20) & JP 02 298343 A (TOAGOSEI CHEM IND CO LTD), 10 December 1990 (1990-12-10)
- PATENT ABSTRACTS OF JAPAN vol. 013, no. 260 (C-607), 15 June 1989 (1989-06-15) & JP 01 063039 A (NIPPON STEEL CORP), 9 March 1989 (1989-03-09)

## Description

### FIELD OF THE INVENTION

This invention relates to oxygen-scavenging compositions having utility in packaging, particularly suitable for being incorporated into film-forming polymers, preferably aromatic polyester resins and the wall of a container made from the aromatic polyester containing the scavenging composition.

### BACKGROUND OF THE INVENTION

Products sensitive to oxygen, particularly foods, beverages and medicines, deteriorate or spoil in the presence of oxygen. One approach to reducing these difficulties is to package such products in a container comprising at least one layer of a so-called "passive" gas barrier film that can act as a physical barrier and reduces or eliminates the transmission of oxygen through the container wall but does not react with oxygen.

Another approach to achieving or maintaining a low oxygen environment inside a package is to use a packet containing a rapid oxygen absorbent material. The packet, also sometimes referred to as a pouch or sachet, is placed in the interior of the package along with the product. The oxygen absorbent material in the sachet protects the packaged product by reacting with the oxygen before the oxygen reacts with the packaged product.

Although oxygen absorbent or scavenger materials used in packets can react chemically with oxygen in the package, they do not prevent external oxygen from penetrating into the package. Therefore, it is common for packaging using such packets to include additional protection such as wrappings of passive barrier films of the type described above. This adds to product costs.

In view of the sachet's disadvantages and limitations, it has been proposed to incorporate the "active" oxygen absorbent, i.e. one that reacts with oxygen, directly into the walls of a packaging article. Because such a packaging article is formulated to include a material that reacts with the oxygen permeating through its walls, the package is said to provide an "active-barrier" as distinguished from passive barrier that merely blocks the transmission of oxygen but does not react with it. Active-barrier packaging is an attractive way to protect oxygen-sensitive products because it not only prevents oxygen from reaching the product from the outside, it can also absorb oxygen present within a container.

One approach for obtaining active-barrier packaging is to incorporate a mixture of an oxidizable metal (e.g., iron) and an electrolyte (e.g., sodium chloride) into a suitable resin, melt process the resulting resin into a monolayer or multilayer sheet or film that eventually form the resulting oxygen scavenger-containing wall or walls of the rigid or flexible container or other packaging article. It should be appreciated that references to the container sidewall and container wall also refer to the lid, bottom and top sides of the container, and a film that may be wrapped around the product such as meat wraps. One difficulty with scavenger systems incorporating an oxidizable metal or metal compound physically separated from metal halide into a thermoplastic layer is the inefficiency of the oxidation reaction. High loading of scavenger compositions and relatively large amounts of electrolyte are often used to obtain sufficient oxygen absorption scavenging rate and capacity in active-barrier packaging.

According to US 5,744,0561, oxygen-scavenging compositions that exhibit improved oxygen-absorption efficiency relative to systems such as iron and sodium chloride are obtainable by including a non-electrolytic, acidifying component in the composition. In the presence of moisture, the combination of the electrolyte and the acidifying component promotes the reactivity of the metal with oxygen to a greater extent than does either alone. However, the acidifying component when used alone does not exhibit sufficient oxygen-scavenging properties.

A particularly preferred oxygen-scavenging composition according to the US patent comprises iron powder, sodium chloride and sodium acid pyrophosphate, in amounts from about 10 to 150 parts by weight of sodium chloride plus sodium acid pyrophosphate per hundred parts by weight iron. Preferably 2 parts of scavenging composition are incorporated into 100 parts by weight of a thermoplastic polymer.

An objection to using conventional oxidizable metals compositions is the growth of the particle as it oxidizes. It has been observed that as the particle oxidizes, the oxidized material blooms away from the particle making the particle appear larger over time and the color shifts towards the color of the oxidized metal. In the case of iron, the color of the container wall shifts to yellow and yellow orange (rust).

Beverage or food containers presenting the above blooms are commercially unacceptable because the consumer incorrectly attributes the color to deterioration of the product inside the container.

JP 11,080,555 discloses an oxygen-absorbing resin composition comprising 100 parts by weight of a thermoplastic resin and 1-100 parts by weight of an iron-based oxygen scavenger wherein said iron-based oxygen scavenger comprises a metal salt (preferably group IIIB IVB or VIII metal halide, especially iron chloride and tin chloride).

Another object of the present invention is to provide -improved oxygen-scavenging compositions particularly suitable for providing container walls and films not presenting a noticeable bloom or color shift upon aging.

Another object of the present invention is to provide improved oxygen scavenging compositions which are not physical blends of oxidizing compounds and solid agents. The intimate contact of the composition of the present invention produces container walls with much lower haze than the conventional compositions.

Another object of the invention is to provide oxygen-scavenging compositions which, when incorporated into polyester resins, do not cause excessive polymer degradation as measured by the intrinsic viscosity during melt processing.

Another object of the invention is to provide oxygen-scavenging compositions that can be effectively used at relatively low levels in a wide range of packaging films and sheets including laminates and coextruded multilayer films and sheets.

Another object of the invention is to provide a rapidly reactive system at electrolyte concentrations previously considered too low to be an effective oxygen scavenger.

Another object of the invention is to provide a rapidly reactive system which can remain dormant until the package is filled and the humidity or moisture of the package triggers the scavenging reaction. This provides a significant cost advantage over currently practiced organic based scavengers which are active when the container is made or require a separate activation step such as light irradiation.

Other objects will be apparent to those skilled in the art.

### SUMMARY AND DETAILED DESCRIPTION OF THE INVENTION

This patent application claims priority from European patent application No. 03425549.7, Titled "Oxygen-scavenging compositions and the application thereof in packaging and containers", Filed on 14 August, 2003.

The above objectives can be attained according to the invention by providing containers according to claim 1, having at least one wall comprising compositions having high oxygen-scavenging efficiency in presence of a protic solvent such as humidity or liquid phase water. These compositions comprise oxidizable metal particles, particularly elemental iron, and a protic solvent hydrolysable halogen compound deposited upon the metal particles from an essentially moisture free liquid in amounts greater than 0.1 weight percent, but preferably more than 1.0 weight percent by the weight of the metal particle. The optimal amount of halogen compound can be determined without undue experimentation. As shown in the nano-iron example, concentrations as high as 50 weight percent may be necessary for reasonable activation.

Many protic solvent hydrolysable halogen compounds such as titanium tetrachloride (TiCl₄), tin tetrachloride (SnCl₄), thionyl chloride (SOCl₂), SiCl₄, POCl₃ and n-butyl-tin chloride (n-butylSnCl₃) are liquids at room temperature. These compounds can be deposited by mixing them directly with the oxidizable metal particle or from an organic solvent. For these compounds, the essentially moisture free liquid can be the protic solvent hydrolysable compound itself. The phrase "deposited from an essentially moisture free solvent" includes protic solvent hydrolysable halogen compounds which are liquids which can be deposited on the iron without an additional compound. One skilled in the art will also recognize that the liquid compounds could equally be placed into an organic solvent that is essentially moisture free.

The amount of moisture allowed in the solvent or liquid is determined by the amount of moisture which will hydrolyze the protic solvent hydrolysable compound. An essentially moisture free solvent is a solvent or liquid whose water content is less than the amount needed to hydrolyze all of the protic solvent hydrolysable halogen compound or compounds. For example, in the case of aluminium chloride, an essentially moisture free solvent would have less than 1.5 moles of water for every of mole of Aluminum Chloride. More than 1.5 moles of water would hydrolyze all the chlorine and thus completely disassociate the aluminium from the chloride thereby preventing deposition of the compound or its adducts.

Other protic solvent hydrolysable halogen compounds such as aluminium alkoxide and higher boiling organometallic compounds are not liquids at room temperature and can be put into an organic solvent, such as ethanol. Preferably, the solvent will solubilize at least 0.5 wt% of protic solvent hydrolysable halogen compound. Other compounds suitable to solubilize and subsequently deposit the protic solvent hydrolysable halogen compound onto oxidizable metal particles are organic solvents, preferably alcohols, ethers, ketones and esters of carboxylic acids.

Preferred protic solvent hydrolysable halogen compounds are the halides, in particular chloride and bromide, more preferably AlCl₃, AlBr₃, FeCl₃, FeCl₂, FeBr₂, TiCl₄, SnCl₄, SbCl₃, SbCl₅, Aluminum halide alkoxides, POCl₃, SOCl₂, SiCl₄, POCl₃ and n-butylSnCl₃.

The deposition of the protic solvent hydrolysable halogen compound(s) and/or its adduct(s) on the metal particle is made from either the liquid compound itself or a solution of the compound and an essentially moisture free organic solvents. The solvent is subsequently removed by evaporation, preferably at reduced pressure. Examples of solvents are alcohols such as ethanol, methanol and isopropanol, ethers, ketones, halogenated organics, aromatics, aliphatics and alkyl esters of acetic acid such as ethylacetate.

As described in Example 7A, the deposition of certain protic solvent hydrolysable halogen compounds, such as FeCl₂, can also be made and deposited in situ by reacting the oxidizable metal particle with an amount of corresponding acid calculated to be higher than 1.0 weight percent of the iron but less than 50 weight percent in the organic solvent and subsequently evaporating the solvent.

Iron is a preferred metal particle. The iron particles preferably have a numeral average size less than 50 µm. While the electrolytic reduced unnanealed or annealed iron is preferred, carbonyl and carbon monoxide or hydrogen reduced sponge irons are also suitable. It should be noted that hydrogen and carbon monoxide reduced forms of iron are generally less reactive than the electrolytic reduced iron.

These compositions are also very effective in making nano-size iron reactive where the conventional blended compositions are not. Nano-size iron particles are those particles with diameters less than 1 micron and greater than 1 nanometer). This is particularly true in a fixed media such as a film or container wall. Dry blends of traditional scavenging compositions do not provide enough salts in intimate contact with the nano-iron to be effective in a fixed media.

Iron does not need to be 100% pure. Minor alloying elements such as nickel, chromium, silicon and other compounds can be present. Mixtures of iron with minor amounts of other metals, preferably more noble than iron, can be used. The iron-based compositions are incorporated into the wall of a container made from film-forming polymers, preferably aromatic polyester, in amounts from 100 to 6000 parts per million parts polymer. While high loadings are possible with the nano scale iron particles, the maximum aesthetically realizable amount of nano-scale iron for a transparent colourless bottle is 300-500ppm.

Suitable polyesters include those produced from aromatic, aliphatic or cycloaliphatic dicarboxylic acids of from 4 to about 40 carbon atoms and aliphatic or alicyclic glycols having from 2 to about 24 carbon atoms.

Polyesters employed in the present invention can be prepared by conventional polymerization procedures well known in the art. The polyester polymers and copolymers may be prepared, for example, by melt phase polymerization involving the reaction of a diol with a dicarboxylic acid, or its corresponding diester. Various copolymers resulting from use of multiple diols and diacids may also be used. Polymers containing repeating units of only one chemical composition are homopolymers. Polymers with two or more chemically different repeat units in the same macromolecule are termed copolymers. The diversity of the repeat units depends on the number of different types of monomers present in the initial polymerization reaction. In the case of polyesters, copolymers include reacting one or more diols with a diacid or multiple diacids, and are sometimes referred to as terpolymers.

As noted herein above, suitable dicarboxylic acids include those comprising from about 4 to about 40 carbon atoms. Specific dicarboxylic acids include, but are not limited to, terephthalic acid, isophthalic acid, naphthalene 2,6-dicarboxylic acid, cyclohexanedicarboxylic acid, cyclohexanediacetic acid, diphenyl-4,4'-dicarboxylic acid, 1,3-phenylenedioxydiacetic acid, 1,2-phenylenedioxydiacetic acid, 1,4-phenylenedioxydiacetic acid, succinic acid, glutaric acid, adipic acid, azelaic acid, sebacic acid, and the like. Specific esters include, but are not limited to, phthalic esters and naphthalic diesters.

These acids or esters may be reacted with an aliphatic diol preferably having from about 2 to about 24 carbon atoms, a cycloaliphatic diol having from about 7 to about 24 carbon atoms, an aromatic diol having from about 6 to about 24 carbon atoms, or glycol ether having from 4 to 24 carbon atoms. Suitable diols include, but are not limited to, 1,4-butenediol, trimethylene glycol, 1,6-hexanediol, 1,4-cyclohexanedimethanol, diethylene glycol, resorcinol, and hydroquinone.

Polyfunctional comonomers can also be used, typically in amounts of from about 0.1 to about 3 mole percent. Suitable comonomers include, but are not limited to, trimellitic anhydride, trimethylolpropane, pyromellitic dianhydride (PMDA), and pentaerythritol. Polyester-forming polyacids or polyols can also be used. Blends of polyesters and copolyesters may also be useful in the present invention.

One preferred polyester is polyethylene terephthalate (PET) formed from the approximate 1:1 stoichiometric reaction of terephthalic acid, or its ester, with ethylene glycol. Another preferred polyester is polyethylene naphthalate (PEN) formed from the approximate 1:1 to 1:1.6 stoichiometric reaction of naphthalene dicarboxylic acid, or its ester, with ethylene glycol. Yet another preferred polyester is polybutylene terephthalate (PBT). Copolymers of PET, copolymers of PEN, and copolymers of PBT are also preferred. Specific copolymers and terpolymers of interest are PET with combinations of isophthalic acid or its diester, 2,6 naphthalic acid or its diester, and/or cyclohexane dimethanol.

The esterification or polycondensation reaction of the carboxylic acid or ester with glycol typically takes place in the presence of a catalyst. Suitable catalysts include, but are not limited to, antimony oxide, antimony triacetate, antimony ethylene glycolate, organomagnesium, tin oxide, titanium alkoxides, dibutyl tin dilaurate, and germanium oxide. These catalysts may be used in combination with zinc, manganese, or magnesium acetates or benzoates. Catalysts comprising antimony are preferred. Another preferred polyester is polytrimethylene terephthalate (PTT). It can be prepared by, for example, reacting 1,3-propanediol with at least one aromatic diacid or alkyl ester thereof. Preferred diacids and alkyl esters include terephthalic acid (TPA) or dimethyl terephthalate (DMT). Accordingly, the PTT preferably comprises at least about 80 mole percent of either TPA or DMT. Other diols which may be copolymerized in such a polyester include, for example, ethylene glycol, diethylene glycol, 1,4-cyclohexane dimethanol, and 1,4-butanediol. Aromatic and aliphatic acids which may be used simultaneously to make a copolymer include, for example, isophthalic acid and sebacic acid.

Preferred catalysts for preparing PTT include titanium and zirconium compounds. Suitable catalytic titanium compounds include, but are not limited to, titanium alkylates and their derivatives, titanium complex salts, titanium complexes with hydroxycarboxylic acids, titanium dioxide-silicon dioxide-co-precipitates, and hydrated alkaline-containing titanium dioxide. Specific examples include tetra-(2-ethylhexyl)-titanate, tetrastearyl titanate, diisopropoxy-bis(acetyl-acetonato)-titanium, di-n-butoxy-bis(triethanolaminato)-titanium, tributylmonoacetyltitanate, triisopropyl monoacetyltitanate, tetrabenzoic acid titanate, alkali titanium oxalates and malonates, potassium hexafluorotitanate, and titanium complexes with tartaric acid, citric acid or lactic acid. Preferred catalytic titanium compounds are titanium tetrabutylate and titanium tetraisopropylate. The corresponding zirconium compounds may also be used.

The polymer using this invention may also contain small amounts of phosphorous compounds, such as phosphates, and a catalyst such as a cobalt compound, that tends to impart a blue hue. Also, small amounts of other polymers such as polyolefins can be tolerated in the continuous matrix.

The melt phase polymerization described above may be followed by a crystallization step, then a solid phase polymerization (SSP) step to achieve the intrinsic viscosity necessary for the manufacture of certain articles such as bottles. The crystallization and polymerization can be performed in a tumbler dryer reaction in a batch-type system.

Alternatively, the crystallization and polymerization can be accomplished in a continuous solid state process whereby the polymer flows from one vessel to another after its predetermined treatment in each vessel. The crystallization conditions preferably include a temperature of from about 100°C to about 150°C. The solid phase polymerization conditions preferably include a temperature of from about 200°C to about 232°C, and more preferably from about 215°C to about 232°C. The solid phase polymerization may be carried out for a time sufficient to raise the intrinsic viscosity to the desired level, which will depend upon the application. For a typical bottle application, the preferred intrinsic viscosity is from about 0.65 to about 1.0 deciliter/gram, as determined by ASTM D-4603-86 at 30 °C in a 60/40 by weight mixture of phenol and tetrachloroethane. The time required to reach this viscosity may range from about 8 to about 21 hours.

In one embodiment of the invention, the article-forming polyester of the present invention may comprise recycled polyester or materials derived from recycled polyester, such as polyester monomers, catalysts, and oligomers. Examples of other film-forming polymers include polyamides, polycarbonate, PVC and polyolefins such as polyethylene and polypropylene.

The oxygen-scavenging compositions can be added directly to the thermoplastic polymer compounding or melt-fabrication operation, such as the extrusion section thereof, after which the molten mixture can be advanced directly to the article-fabrication line.

Alternatively, the compositions can be compounded into masterbatch concentrate pellets, which can be further incorporated into packaging polymers for further processing into the desired article.

The concentrates in polyester resins preferably contain more than 20 parts of oxygen-scavenging composition per hundred parts of resin. Containers having at least one wall incorporating the oxygen-scavengers of the present invention are the preferred articles. Cups, pouches, boxes, bottles, lids and wrapped films are also examples of such walls. Stretched and unstretched films are included in the definition of container walls.

It is also contemplated to provide articles, with both active and passive oxygen barrier properties through use of one or more passive gas barrier layers in conjunction with one or more layers according to the invention. Alternatively, the passive barrier and oxygen scavenging composition may both be in the same layer.

Thus for products calling for long shelf-life, an oxygen scavenging layer according to the present invention can be used in conjunction with a passive gas barrier layer. Alternatively, it is also advantageous to incorporate this oxygen scavenging composition in the wall of a container comprising polyester and up to 10 weight percent of a high barrier thermoplastic, such as a polyamide. This increases the passive barrier performance of the wall and the active barrier of the wall.

In addition to reducing the large colored bloom after reacting with oxygen, the oxygen-scavenging compositions of the present invention significantly reduce the amount of polymer degradation as measured by loss of intrinsic viscosity (I.V.) of the aromatic polyesters occurring in the melt-processing of these resins e.g. injection molding preforms for bottles or extruding sheet and film. It has also been observed that the intrinsic viscosity loss of the preform attributed to the scavenger was not higher than 60% of the I.V. loss in the absence of the scavenger.

The I.V. loss of preforms made using the oxygen scavenger composition is 80% less than the I.V. loss of scavenger compositions with comparable oxygen reaction capability (Table B).

Another advantage of the claimed scavengers and of the polymers and manufactured articles into which they are incorporated is their storage stability i.e. their lack of reactivity in the absence of humidity, which permits long storage periods before filling.

Another characterizing aspect is the remarkably high oxygen-absorption rate performed by the scavengers not incorporated into polymers, which is much higher than that of known scavengers and which is performed without the aid of NaCl or similar electrolytes.

Another aspect of the invention is the intimacy of contact of the oxidizable metal with the protic solvent hydrolysable halide. Because the compound is deposited from a liquid, the composition is present in the form of a single particle, as opposed to a dry blend which may have a similar composition, but in an entirely different form. United States Patent 4,127,503 teaches the dissolution of sodium chloride as an example of a metal halide deposited onto iron from water.

The teachings of the patent were followed substituting Aluminum Chloride for sodium chloride. Instead of dissolving, the aluminum chloride reacted violently with the water generating hydrochloric acid. When placed into the water, the hydrochloric acid reacted with the iron to create ferric chloride on the surface. In this instance, the ferric chloride was reacted onto, rather than deposited onto, the iron particle. Thus, while US-A-4,127,503 discloses aluminium chloride and iron deposited from water, it does not teach a particle of aluminum chloride and iron, nor does it teach one how to make a particle of iron with aluminum chloride in intimate contact with iron.

As mentioned, the containers having at least a light transmitting wall comprising the oxygen-scavenging compositions of the present invention, advantageously possess both high scavenging efficiency and the unique property of the reduced bloom of the particle upon reacting with oxygen in presence of humidity. The reduced bloom size also occurs in containers having haze values falling within a commercially acceptable range.

Many polymers are transparent, but polymers that are transparent to visible light may become opaque, as the result of the presence of additives such as fillers, scavengers, stabilizers, and similar additives. The opacity results from light-scattering occurring within the material.

Haze is the measure of the amount of light deviation from the direction of transmittance by at least 2.5 degrees.

The colour and brightness of a polyester article can be observed visually, and can also be quantitatively determined by a HunterLab ColorQuest Spectrometer. This instrument uses the 1976 CIE, a*, b* and L* designation of colour and brightness. An a* coordinate defines a colour axis wherein plus values are toward.the red end of the colour spectrum and minus values are toward the green end.

The b* coordinate defines a second colour axis, wherein plus values are toward the yellow end and minus values are toward the blue end.

Higher L* values indicate enhanced brightness of the material.

As indicated, the containers comprising at least one wall incorporating the oxygen scavengers of the present invention do not present as large a bloom as conventional scavengers upon aging.

The microscope observation of the wall upon aging shows a limited number of black dots uniformly distributed within the wall; the wall area occupied by the dots is a small fraction of the total area. By contrast, the wall of the containers incorporating prior art oxygen-scavengers show marked visual dots due to the formation of large blooms distributed along the wall. Conventional scavengers also show a yellow/orange coloration. The compositions listed in the examples showed a darkening of the container wall, but no yellow/orange shift in colour.

The colour parameters of the wall of the containers of the present invention show a small decrease of the minus a* values and plus b* values referred to the a* and b* values of the wall not containing scavengers, whereas the walls incorporating prior art scavengers show plus a* values and increased plus b* values.

Preferred wall-containers are stretched bottles with a thickness from about 280 to 410 µm and haze values of about 20% or less. Note that all bottle sidewalls used in the examples fall within the thickness noted.

The following examples are provided for purpose of illustrating the manufacture of the composition and the composition properties and are not intended to limit the scope of the invention. The composition is made by depositing a protic solvent hydrolysable halogen compound and/or its adduct upon iron powder by either using the liquid protic solvent hydrolysable halogen compound itself or creating a solution of protic solvent hydrolysable halogen compounds in an essentially moisture free organic solvent, contacting the liquid with iron and then evaporating any solvent from the solid. This evaporation, if necessary, can be made using any number of techniques, one of them being a spray dryer.

It should be noted that it is unclear when the protic solvent hydrolysable halogen compound is deposited from a solvent whether it is the original protic solvent hydrolysable halogen compound that is deposited upon the iron, the adduct or the reaction product of the protic solvent hydrolysable halogen compounds with the organic solvent.

In the experiments a small reaction exotherm was observed along with a small amount of white vapours coming from the solution. These vapours reacted with pH paper to indicate evolution of an acidic vapour. In the case of aluminum chloride, the literature all points a reaction. (see e.g. Aluminum Chloride [alias its reaction product(s) with ethanol] for the stabilization of poly(vinyl) chloride, Starnes, William H, Seren, Frantz, and Chung, Haksoo Thomas, Polymer Degradation and Stability 56 (1977) describing the literature noting a reaction of AlCl₃ with ethanol). Analysis of the iron powder indicates that virtually all the chlorine has been deposited on the iron, which is indicative that no reaction occurred. It is for this reason that the protic solvent hydrolysable compound and its adducts formed when exposed to an organic solvent are considered part of the invention. Adducts is meant to include those complexes, or reaction products, that might have been formed.

### EXAMPLE 1

All the operations of this example were conducted to exclude or minimize the presence of oxygen and humidity. 5.0 grams of AlCl₃ (Aldrich Chemical, 99.9%) were weighed in a nitrogen purged sample vial inside a nitrogen glove bag and capped.

200 grams of iron powder (electrolytically reduced and annealed, -325 mesh, -45 µm) was placed into a nitrogen glove bag for later addition to the solution obtained by dissolving AlCl₃ with ethanol.

A 1000 ml nitrogen purged reaction flask with stir bar was filled with 500 ml ethanol (Aldrich, absolute, > 99.5% vol., ACS reagent) in a way to minimize exposure to air. The 5.0 g of AlCl₃ was added through the flask neck. After the AlCl₃ addition, the neck of the reaction flask was immediately attached to a Claisen adapter/condenser assembly. The exothermic dissolution of the AlCl₃ in ethanol evolved some white vapours. The white vapours were carried to a NaOH scrubber by a nitrogen sweep. Although the mixture was stirred for 15 minutes under nitrogen, the added AlCl₃ was completely dissolved in about 10 minutes yielding a clear solution.

The flask was disconnected from the Claisen adapter/condenser assembly, stoppered and transferred into a nitrogen glove bag wherein the flask was unsealed and the 200 g of iron powder are added to the solution. The ethanol was removed with a rotary evaporator at reduced pressure (70-75 Torr) in a 30°C water bath. Ethanol removal was stopped when the iron mixture had the appearance of wet sand. Final ethanol removal was completed by placing the flask (unstoppered) in a vacuum oven set at 10-12 Torr and 30°C for 16-18 hours.

The dried solid product, in the form of a crusty mass, was shaken in the flask to break it up and then lightly ground to obtain a flowable powder which was stored in a sample jar inside a nitrogen glove bag.

The chlorine content of the solid product showed that virtually all the chlorine added as AlCl₃ was deposited upon the iron.

Table A shows the efficient and rapid oxygen reactivity of the powder. The theoretical consumption of 300 cm³ O₂/gram iron was achieved in approximately 2 days.

The composition was stored for 4 months in nitrogen at room temperature. The oxygen absorption rate after four months remained practically unchanged from the rate when immediately made.

The composition of EXAMPLE 1 was heat treated under a hot nitrogen stream for 30 minutes at temperatures of 150°, 200°, and 250° C. While there was a loss in weight over time, no real impact on oxygen absorption rate was observed.

Table B shows the container properties when the composition was incorporated into a 52.5 gram preform and made into the wall of a 2 Liter PET (containing 2% isophthalic acid units) bottle.

### EXAMPLE 2

The preparation was the same as EXAMPLE 1 but the amount of AlCl₃ dissolved in ethanol and deposited on iron was varied from 0.5, 1, 1.5 and 2 wt% (calculated as AlCl₃) by weight of iron. These examples are labelled 2A, 2B, 2C, and 2D respectively.

Samples of the dried solid product were tested for oxygen absorption rate 1, 3, 6 and 8 days. The results of days 1 and 3 are presented in Table A.

### EXAMPLE 3

The preparation of EXAMPLE 1 was repeated. The only difference being that the aluminum chloride (5.0 g, 2.5% wt. AlCl₃ based on weight of iron) was added to a stirred suspension of iron powder (200 g) in ethanol (500 ml) under a nitrogen atmosphere. After drying, a sample of the solid product was tested for the rate of oxygen absorbance. The results are listed in Table A.

### EXAMPLE 4

The preparation of EXAMPLE 1 was repeated with aluminum bromide substituted for AlCl₃ (5.0 g, 2.5% wt. AlBr₃ based on weight of iron). The results are listed in Table A.

### EXAMPLE 5

The preparation of EXAMPLE 1 was repeated using carbon monoxide reduced sponge iron in place of electrolytic iron.

The oxygen absorption tested at 1, 3, 6 and 8 days was 120, 240, 280 and 300 ml oxygen/g iron-Al compound composition, respectively. The 1 and 3 day data are listed in Table A.

### EXAMPLE 6

The preparation of EXAMPLE 1 was repeated with other organic non-protic solvents substituted for ethanol. The solvents substituted for ethanol were methanol, 1-butanol, 1-hexanol, diethyl ether and ethyl acetate and are labelled 6A, 6B, 6C, 6D, and 6E respectively.

Samples of the dried solid iron products were tested for oxygen absorption rate by the test listed in the Analytical procedures section and are listed in Table A.

### EXAMPLE 7

All operations of this example were conducted in a way to exclude or minimize the presence of oxygen.

A solution of ferrous chloride (FeCl₂, 2.68% wt. FeCl₂ based on weight of oxygen scavenger iron to give 1.50% wt. Chloride on the iron) in ethanol was prepared by reacting a slight stoichiometric excess of iron powder and aqueous concentrated hydrochloric acid, and then deposited onto the oxygen scavenging iron powder as detailed below.

Electrolytic iron powder (2.38 g), absolute ethanol (50 ml), and aqueous concentrated hydrochloric acid (8.20 g) were added to a 1000 ml reaction flask, (previously purged with nitrogen for 10 minutes). The iron and concentrated HCl are reacted at room temperature under a nitrogen atmosphere until the evolution of hydrogen stops, leaving a clear solution with a light green tint and a small amount of unreacted excess iron. The flask is stoppered and put into a nitrogen glove bag. Inside the glove bag, additional absolute ethanol (450 ml) and the iron powder (200 g) were added to the original solution. The ethanol was removed from the resulting mixture under reduced pressure (70-75 Torr, 30°C water bath). Final ethanol removal from the solid was accomplished by placing the unstoppered flask in a vacuum oven at 30°C and 10-12mm Hg for 16 hours. The dried solid product was broken up inside a nitrogen glove bag, scraped out of the flask, and lightly ground to obtain a flowable powder and stored under nitrogen until use. After final ethanol removal, the solid product was tested for oxygen absorbance rate at room temperature by the test listed in the Analytical Procedures section. The results are listed in Table A.

### EXAMPLE 7A

Ferrous chloride is prepared and deposited onto iron powder in a one step procedure following the general methods in EXAMPLE 7. The ferrous chloride (2.68% wt. FeCl₂ to give 1.50% wt. Chloride) was generated in situ by the addition of aqueous concentrated hydrochloric acid (0.0846 moles HCl) to a stirred suspension of iron powder (202.36 g) in ethanol (500 ml) under a nitrogen atmosphere. The amount of iron used is equal to the oxygen scavenger iron (200.00 g) plus the amount of iron (2.36 g) needed to react with the concentrated HCl to form the desired amount ferrous chloride. After drying, a sample of the solid product was tested for oxygen absorbance rate at room temperature by the test listed in the Analytical Procedures section. The results are listed in Table A.

### EXAMPLE 7B

The preparation of EXAMPLE 1 is repeated with the only difference being that anhydrous solid ferrous chloride (7.13 g, 3.57% weight based on iron to give 1.9% wt. Chloride, Aldrich Chemical #45,094-4) was substituted for aluminium chloride and dissolved in ethanol. A sample of the dried solid product was tested for oxygen absorbance rate at room temperature by the test listed in the Analytical Procedures section. The results are listed in Table A.

### EXAMPLE 8 Comparison

The preparation of EXAMPLE 7 was repeated, the only difference being that a solution of ferrous acetate (2.68% weight based on weight of oxygen scavenger iron) in ethanol was prepared from a slight stoichiometric excess of iron powder and glacial acid, which is then deposited onto the oxygen scavenging iron powder. A sample of the dried solid product was tested for oxygen absorbance rate at room temperature by the test listed in the Analytical Procedures section. The results are listed in Table C.

### EXAMPLE 9 - Comparison

Under a nitrogen atmosphere, aluminium chloride powder was added directly to electrolytic iron powder at 2.5% and 10% weight based on the weight of iron and blended for two hours at room temperature on a roller mill. These are labelled 9A and 9B, respectively. 2 Liter bottles were made and sidewalls properties measured. The oxygen and visual data for the 2.5 wt% is presented in table C. The Hunter haze for the 10% blend at 3000ppm iron was 53% and well above any commercially acceptable criteria for a transparent bottle.

### EXAMPLES 10 - Comparison

Compositions were made blending iron and NaCl (8% weight based on weight of iron) and blending iron and NaHSO₄ (10% weight based on weight of iron as described in U.S Patent # 5885481). These blends were prepared by adding the appropriate salt directly into the iron powder and mechanical blending of the mixture in a rotary mill. These two compositions are labelled 10A and 10B respectively and were converted into 2 Liter bottles containing 4000 ppm of either blend. They were converted into bottles by mixing the respective blend with PET, injection blow molding 52.5g preforms, and blowing the preforms into 2 liter bottles. The accelerated oxygen absorbance rate at 50°C, the Hunter Haze, and the drop in intrinsic viscosity are shown in Table B.

### EXAMPLE 11 - Comparison

A dry blend of 3000 ppm weight iron of Freshblend™ Scavenger from Multisorb Technologies, Buffalo, New York USA was injection molded with PET into a 52.5 gram preform and made into a bottle (See "multiple Functionality Sorbents", Calvo, William D. Proceedings of ACTIVEPack Conference, p9 (2003) (announcing the commercialisation of Freshblend™ for polyester). The sidewall was subjected to the accelerated oxygen absorbance test (.11 cm³ O₂/g polymer/1000 ppm Fe). After three days a light photomicrograph at 50x (Fig. 1) was taken and compared to photomicrograph of example 1 at 3 days (Fig. 2). While the compositions had comparable oxygen scavenger absorbance, size of the blooms is significantly smaller for Example 1, the subject of the current invention. Additionally, the I.V. drop for Example 11 was 0.10, about 5 times greater than example 1.

### EXAMPLE 12 - Liquid Metal Halides

This set of examples was made using TiCl₄ and SnCl₄ and are labelled 11A and 11B, respectively. The liquid halide was deposited onto the electrolytic iron which had previously been sieved to -44 micron. Deposition was made by contacting the liquid with the iron and stirring with glass rod. The amount of halide added to the iron is noted in Table A. In each case the material set overnight in a nitrogen purge before being subjected to the O₂ tests as both treated iron powder. The same procedure was used on electrolytic iron sieved to -20 micron and incorporated into a bottle sidewall. Data for the bottle sidewall can be found in Table B.

### EXAMPLE 13 - Liquid non-metallic Halides

This set of examples was made using POCl₃, SOCl₂ and SiCl₄ and are labelled 13A, 13B, and 13C respectively. The liquid halide was deposited onto the electrolytic iron which had previously been sieved to -20 micron. Deposition was made by contacting the liquid with the iron and stirring with glass rod. The amount of halide added to the iron is noted in Table A. In each case the material set overnight in a nitrogen purge before being subjected to the O₂ tests as both treated iron powder and incorporated into bottles as described elsewhere.

### EXAMPLE 14 - Organo-Metal Halide and Alkoxide Halide

In this set of examples, complex halides were used. 14A used n-Butyl Tin Chloride (nBTCl)(nC4H9SnCl3). The nBTCL is a liquid and was deposited on the -44 micron electrolytic reduced iron in the manner described in series 12 and in the amount noted in Table A. 14B used Al(OEt)Cl₂. The alkoxide compound used in 14B was manufactured using the teachings of US patent 5,166,408 for catalyst solution A and the Journal of Organometallic Chemistry, 153 (1978) 281-288.

An ethanol/hexane solution was made by adding .2335 grams of Ethanol to 5 ml of mixed hexanes. 20 ml of mixed hexanes were then placed into a 250 ml flask and cooled to 4 °C. 5 ml of 1.0M EtAlCl2 in hexane solution (Aldrich 25,161-5) was added to the cold hexanes in the 250ml flask. The 5 ml Ethanol/Hexane solution was added to the 250ml flask and allowed to warm to room temperature. 28.38 grams of -44 micron electrolytic iron was then added to the flask. The volatiles were then removed by rotovapping the powder under vacuum. Analysis of this iron/alkoxide is provided in Table A and bottle data provided in Table B.

### EXAMPLE 15 - Nano Iron.

This set of experiments used various compounds and techniques from the previous 14 set of experiments to demonstrate the ability of the liquid deposition to initiate the reaction of nano-iron. 15A used a 10.0% AlCl₃ on the iron deposited from an ethanol solution as described in Experiments 1 and 2. 15B was 25 weight percent n-butyl SnCl₃ deposited onto the nano iron. The material was incorporated into bottle sidewall and analyzed for O₂ reactivity. The bottle sidewall results are reported in Table B. Note that at 3000ppm, the bottle containing nano-iron is very dark and opaque making haze measurements meaningless.

The nano iron has an average particle size of 120 nano-meters and was obtained from Argonide Corporation, Florida USA. The nano-iron is produced by the electro-exploded wire technique and then packed in glass or plastic bottles under hexane or mineral oil. The organic packing media was removed by using a rotovap at room temperature and 25 inches of Hg vacuum. The vacuum was increased to full vacuum and the temperature increased to 30 °C.

**TABLE A**

| Example | Type | O₂ Reacted (cm³ O₂/gram iron powder) | | |
|---|---|---|---|---|
| | | day 1 | day 2 | day 3 |
| 1 | 2.5% AlCl₃ - Ethanol | 272 | 292 | |
| 2A | 0.5% AlCl₃ - Ethanol | 249 | | 234 |
| 2B | 1.0% AlCl₃ - Ethanol | 274 | | 270 |
| 2C | 1.5% AlCl₃ - Ethanol | 276 | | 310 |
| 2D | 2.0% AlCl₃- Ethanol | 272 | | 314 |
| 3 | 2.5% AlCl₃ - Ethanol / One-Step | 268 | 301 | |
| 4 | 2.5% AlBr₃ - Ethanol | 252 | | 283 |
| 5 | 2.5% AlCl₃ - Ethanol, CO reduced sponge Iron | 120 | | 280 |
| 6A | 2.5% AlCl₃ - Methanol | 285 | 293 | |
| 6B | 2.5% AlCl₃ - Butanol | 278 | 289 | |
| 6C | 2.5% AlCl₃ - Hexanol | 261 | 293 | |
| 6D | 2.5% AlCl₃ - Diethyl Ether | 260 | 250 | |
| 6E | 2.5% AlCl₃ - Ethyl Acetate | 262 | 293 | |
| 7 | 1.5% Cl - in situ FeCl₂ / Ethanol | 300 | | 297 |
| 7A | 1.5% Cl - in situ FeCl₂ / Ethanol/One-Step | 298 | 292 | |
| 7B | 1.9% Cl - FeCl₂ / EtOH | 276 | 303 | |
| 8 Comparison | 2.68% Fe(II) Acetate-Ethanol | 117 | | 189 |
| 12A | 2.67% wt_{.} TiCl₄ | 226 | 253 | |
| 13A | 2.87% wt. POCl₃ | 223 | | 301 |
| 13B | 3.35% wt. SOCl₂ | 238 | | 290 |
| 14A | 5.29% n-Butyl SnCl₃ | 41 | | 268 |
| 14B | 2_{.}5% wt. Al(OEt)Cl₂ | 217 | | 270 |

**TABLE B - PET Bottle Sidewalls**

| Example | Composition, Ppm in PET sidewall | O₂ reacted in 10 days cm³ O_{2/}gmPET/1000ppm Fe | Hunter Haze (%) | I.V. loss during injection molding |
|---|---|---|---|---|
| 1 | 2.5% AlCl₃ -Ethanol, 3000 ppm | 0.109 | 15.69 | 0.016 |
| 7A | 1.5% FeCl₂ -Ethanol, 3000 ppm | 0.079 | 13.96 | 0.032 |
| 10A | 8 Wt % NaCl Blend, 4000ppm Fe-NaCl Blend with PET | 0.047 | 38.80 | 0.081 |
| 10B | 10 Wt% NaHSO₄ Blend, 4000 ppm Fe | 0.085 | 37.10 | 0.080 |
| 12A | 3.0 Wt% TiCl₄, 3000ppm -20µ Fe | 0.096 | 23.97 | |
| 13A | 3.30 Wt% POCl₃, 3000ppm -20µ Fe | 0.081 | 20.98 | |
| 14A | 5.29 Wt% n-Butyl SnCl₃, 3000ppm -44µ Fe | 0.032 | 16.72 | |
| 14B | 2.50 wt% Al (Oet) Cl₂, 3000 ppm, -44µ Fe | 0.090 | 15.72 | 0.017 |
| 15A | 10.0% AlCl₃-Ethanol, 3000ppm nano-Fe | 0.127 | | |
| 15B | 25% n-BuSnCl₃, 3000ppm nano-Fe | 0.064 | | |

**Table C - Dry Blend versus organic deposition**

| EXAMPLE | Fe Composition | O₂ reacted in 3 Days cm³ O_{2/}gm PET/ 1000ppm Fe | Hunter Haze (%) | IV Loss During Injection Molding |
|---|---|---|---|---|
| 9A | 2.5 wt% AlCl₃ Dry Blend, 3000ppm in PET | 0.014 | 19.84 | 0.031 |
| 1 | 2.5 wt% AlCl₃ -Ethanol, 3000ppm in PET | 0.045 | 15.69 | 0.016 |

### Analytical Procedures

### Oxygen Absorbance Test - Iron Powder

Samples of powder of the iron-containing compositions are weighed into 20 ml vials, activated with water and crimp sealed. Prior to weighing the samples, the vials are flushed with nitrogen and capped. Samples of about 10 mg are weighed to nearest 0.1 mg on a balance inside a nitrogen glove bag, placed into the vial and the vial recapped. The sample is activated by uncapping the iron filled vial, gently blowing out the vial for 30 seconds with dry air (passed through a CaSO₄ column) and adding deionized water (4 µl) via a 10 µl syringe. The tubes are sealed and time started. The iron powders are stored at room temperature (RT, 18-22°C). The individual tubes are analysed by gas chromatography for consumption of oxygen vs. a control at the prescribed time interval. Each time point is the average of three determinations.

### Accelerated Oxygen Absorbance Test - Polymer Samples

Bottle sidewall samples of the iron-containing compositions are cut to a predetermined size with a template and the sidewall sample weights (to the nearest 0.01 g) are recorded. The samples are placed into 20 ml vials, activated with 2 ml of aqueous 0.001 M acetic acid and crimp sealed. The sidewall samples are stored at 50°C. The individual tubes are analysed by gas chromatography for consumption of oxygen vs. a control at the prescribed time interval. Each point is the average of three individual determinations.

Intrinsic Viscosity is determined by ASTM D-4603-86 at 30 °C in a 60/40 by weight mixture of phenol and tetrachloroethane.

### The Hunter haze measurement

The measurements were taken through the bottle side-walls. A HunterLab ColorQUEST Sphere Spectrophotometer System equipped with an IBM PS/2 Model 50Z computer, IBM Proprinter II dot matrix printer, assorted specimen holders, and green, gray and white calibration tiles, and light trap was used. The HunterLab Spectrocolorimeter integrating sphere sensor is a color and appearance measurement instrument. Light from the lamp is diffused by the integrating sphere and passed either through (transmitted) or reflected (reflectance) off an object to a lens. The lens collects the light and directs it to a diffraction grating that disperses it into its component wave lengths. The dispersed light is reflected onto a silicon diode array. Signals from the diodes pass through an amplifier to a converter and are manipulated to produce the data. Haze data is provided by the software. It is the calculated ratio of the diffuse light transmittance to the total light transmittance multiplied by 100 to yield a "Haze %" (0% being a transparent material, and 100% being an opaque material). Samples prepared for either transmittance or reflectance must be clean and free of any surface scratches or abrasion. The size of the sample must be consistent with the geometry of the sphere opening and in the case of transmittance, the sample size is limited by the compartment dimension. Each sample is tested in four different places, for example on the bottle sidewall or representative film area.

A Panametrics Magna-Mike 8000 Hall Effect Thickness Gauge was employed to measure the bottle sidewall thickness.

## Claims

1. A container from a film-forming polymer, having at least one wall comprising an effective amount of an oxygen-scavenging composition wherein said oxygen scavenging composition comprises oxidizable metal particles and at least one protic solvent hydrolysable halogen compound and/or its adducts, wherein said protic solvent hydrolysable halogen compound and/or its adducts have been deposited upon the oxidizable metal from an essentially moisture free liquid, wherein the effective amount of the oxygen-scavenging composition is from 100 to 6,000 parts by weight per million part by weight of the wall of the container, the film-forming polymer is an aromatic polyester or a polyester/polyamide blend, and the wall has a transmission Hunter haze of up 0.04 percent per µm of the container wall.

2. The container according to claim 1, wherein said protic solvent hydrolysable halogen compound is a water hydrolysable Lewis acid and/or its adducts and has been deposited upon the oxidizable metal from an essentially moisture free solution comprising an organic solvent.

3. The container according to claim 1 or 2, wherein the oxygen-scavenging composition comprises iron.

4. The container according to claim 3, wherein the protic solvent hydrolysable halogen compound deposited on iron is AlCl₃.

5. The container according to claim 4, wherein the AlCl₃ is deposited in the form of an adduct made from the interaction of AlCl₃ with at least one organic solvent.

6. The container according claim 1 or 2, wherein the protic solvent hydrolysable halogen compound is deposited in form of an adduct made from the interaction of protic solvent hydrolysable halogen compound with at least one non-protic solvent, wherein at least one organic solvent is from the group consisting of ethanol, methanol, propanol, butanol, hexanol, diethyl ether, or ethyl acetate.

7. The container according to claim 3, wherein the salt deposited on iron is PeCl₃.

8. The container according to any one of claims 3 to 7, wherein the protic solvent hydrolysable halogen compound and/or its adducts is deposited upon the oxidizable metal from an essentially moisture free liquid.

9. The container according to claim 8, wherein the essentially moisture free liquid is ethanol.

10. The container according to claim 8, wherein AlCl₃ and/or FeCl₃ are deposited on iron from a solution in an alcohol selected from the group consisting of ethanol, methanol, isopropanol, butanol, and hexanol.

11. The container according to claim 8 wherein the protic solvent hydrolysable halogen compound is selected from the group consisting of AlCl₃, FeCl₂, PeCl₃, TiCl₄, SnCl₄, SiCl₄, POCl₃, SOCl₂, Al(OEt)Cl₂ and n-Butyl SnCl₃ .

12. The container according to any one of the preceding claims, wherein the aromatic polyester in selected from the group consisting of polyethylene terephthalate and copolymers thereof wherein up to 10% by moles of units of terephthalic acid are substituted by units from isophthalic acid and/or naphthalene dicarboxylic acids.

13. The container according to any one of the preceding claims, wherein the container is a stretched bottle.

14. The container according to any one of the preceding claims, wherein the sidewall of the stretched bottle is 280 to 410 microns thick and has Hunter haze values of 20% or less.

15. The container according to any one of the preceding claims, wherein the container does not exhibit any visible blooms after three days of accelerated oxygen absorbance.

16. The container according to any one of the preceding claims, wherein said particles of oxidizable metal are of iron having an average diameter less than 1.0 µm and the iron-based compositions are incorporated into said wall in an amount of up to 500 parts by weight per million parts by weight polymer.

## Patentansprüche

1. Ein Behälter aus einem filmbildenden Polymer mit mindestens einer Wand, umfassend eine wirksame Menge einer Sauerstoff entfernenden Zusammensetzung, wobei die Sauerstoff entfernende Zusammensetzung oxidierbare Metallteilchen und mindestens eine durch protisches Lösungsmittel hydrolysierbare Halogenverbindung und/oder ihre Addukte umfasst, wobei die durch protisches Lösungsmittel hydrolysierbare Halogenverbindung und/oder ihre Addukte auf dem oxidierbaren Metall aus einer im Wesentlichen feuchtigkeitsfreien Flüssigkeit abgeschieden worden sind, wobei die wirksame Menge der Sauerstoff entfernenden Zusammensetzung 100 bis 6000 Gewichtsteile pro Million Gewichtsteile der Wand des Behälters beträgt, das filmbildende Polymer ein aromatischer Polyester oder eine Polyester-/Polyamid-Mischung ist und die Wand eine Transmission-Hunter-Trübung (transmission Hunter haze) von bis zu 0,04 % pro µm der Behälterwand aufweist.

2. Der Behälter gemäß Anspruch 1, wobei die durch protisches Lösungsmittel hydrolysierbare Halogenverbindung eine durch Wasser hydrolysierbare Lewis-Säure und/oder ihre Addukte ist und auf dem oxidierbaren Metall aus einer im Wesentlichen feuchtigkeitsfreien Lösung, umfassend ein organisches Lösungsmittel, abgeschieden worden ist.

3. Der Behälter gemäß Anspruch 1 oder 2, wobei die Sauerstoff entfernende Zusammensetzung Eisen umfasst.

4. Der Behälter gemäß Anspruch 3, wobei die auf Eisen abgeschiedene durch protisches Lösungsmittel hydrolysierbare Halogenverbindung AlCl₃ ist.

5. Der Behälter gemäß Anspruch 4, wobei das AlCl₃ in Form eines Addukts, hergestellt durch Zusammenwirken von AlCl₃ mit mindestens einem organischen Lösungsmittel, abgeschieden worden ist.

6. Der Behälter gemäß Anspruch 1 oder 2, wobei die durch protisches Lösungsmittel hydrolysierbare Halogenverbindung in Form eines Addukts, hergestellt durch Zusammenwirken der durch protisches Lösungsmittel hydrolysierbaren Halogenverbindung mit mindestens einem nicht protischen Lösungsmittel, abgeschieden worden ist, wobei mindestens ein organisches Lösungsmittel aus der Gruppe bestehend aus Ethanol, Methanol, Propanol, Butanol, Hexanol, Diethylether oder Ethylacetat, stammt.

7. Der Behälter gemäß Anspruch 3, wobei das auf Eisen abgeschiedene Salz FeCl₂ ist.

8. Der Behälter gemäß einem der Ansprüche 3 bis 7, wobei die durch protisches Lösungsmittel hydrolysierbare Halogenverbindung und/oder ihre Addukte auf dem oxidierbaren Metall aus einer im Wesentlichen feuchtigkeitsfreien Flüssigkeit abgeschieden worden ist.

9. Der Behälter gemäß Anspruch 8, wobei die im Wesentlichen feuchtigkeitsfreie Flüssigkeit Ethanol ist.

10. Der Behälter gemäß Anspruch 8, wobei AlCl₃ und/oder FeCl₂ aus einer Lösung in einem Alkohol, ausgewählt aus der Gruppe bestehend aus Ethanol, Methanol, Isopropanol, Butanol und Hexanol, auf Eisen abgeschieden worden sind.

11. Der Behälter gemäß Anspruch 8, wobei die durch protisches Lösungsmittel hydrolysierbare Halogenverbindung ausgewählt ist aus der Gruppe bestehend aus AlCl₃, FeCl₂, FeCl₃, TiCl₄, SnCl₄, SiCl₄, POCl₃, SOCl₂, Al(OEt)Cl₂ und n-Butyl-SnCl₃.

12. Der Behälter gemäß einem der vorstehenden Ansprüche, wobei der aromatische Polyester ausgewählt ist aus der Gruppe bestehend aus Polyethylenterephthalat und Copolymeren davon, wobei bis zu 10 Mol-% an Einheiten von Terephthalsäure durch Einheiten von Isophthalsäure und/oder Naphthalindicarbonsäuren substituiert sind.

13. Der Behälter gemäß einem der vorstehenden Ansprüche, wobei der Behälter eine gestreckte Flasche ist.

14. Der Behälter gemäß einem der vorstehenden Ansprüche, wobei die Seitenwand der gestreckten Flasche 280 bis 410 µm dick ist und Hunter-Haze-Werte von 20 % oder weniger aufweist.

15. Der Behälter gemäß einem der vorstehenden Ansprüche, wobei der Behälter keine sichtbaren Schleier nach drei Tagen beschleunigter Sauerstoffabsorption aufweist.

16. Der Behälter gemäß einem der vorstehenden Ansprüche, wobei die Teilchen des oxidierbaren Metalls aus Eisen mit einem mittleren Durchmesser von weniger als 1,0 µm sind und die auf Eisen basierenden Zusammensetzungen in einer Menge von bis zu 500 Gewichtsteilen pro Million Gewichtsteilen an Polymer in die Wand eingebracht werden.

## Revendications

1. Récipient constitué d'un polymère formant un film présentant au moins une paroi comprenant une quantité efficace d'une composition fixant l'oxygène dans lequel ladite composition fixant l'oxygène comprend des particules de métal oxydable et au moins un composé d'halogène hydrolysable dans un solvant protique et/ou ses produits d'addition, dans lequel ledit composé d'halogène hydrolysable dans un solvant protique et/ou ses produits d'addition ont été déposés sur le métal oxydable à partir d'un liquide essentiellement exempt d'humidité, dans lequel la quantité efficace de la composition fixant l'oxygène est de 100 à 6 000 parties en poids par partie en million en poids de la paroi du récipient, le polymère formant un film est un polyester aromatique ou une combinaison de polyester/polyamide et la paroi présente un indice de voile Hunter de transmission allant jusqu'à 0,04 % par micromètre de la paroi du récipient.

2. Récipient selon la revendication 1, dans lequel ledit composé d'halogène hydrolysable dans un solvant protique est un acide de Lewis hydrolysable dans l'eau et/ou ses produits d'addition et a été déposé sur le métal oxydable à partir d'une solution essentiellement exempte d'humidité comprenant un solvant organique.

3. Récipient selon la revendication 1 ou 2, dans lequel la composition fixant l'oxygène comprend du fer.

4. Récipient selon la revendication 3, dans lequel le composé d'halogène hydrolysable dans un solvant protique déposé sur le fer est AlCl₃.

5. Récipient selon la revendication 4, dans lequel le AlCl₃ est déposé dans la forme d'un produit d'addition constitué par l'interaction de AlCl₃ avec au moins un solvant organique.

6. Récipient selon la revendication 1 ou la revendication 2, dans lequel le composé d'halogène hydrolysable dans un solvant protique est déposé dans la forme d'un produit d'addition constitué par l'interaction d'un composé d'halogène hydrolysable dans un solvant protique avec au moins un solvant non-protique, dans lequel au moins un solvant organique est choisi dans le groupe constitué de l'éthanol, du méthanol, du propanol, du butanol, de l'hexanol, du diéthyléther ou de l'acétate d'éthyle.

7. Récipient selon la revendication 3, dans lequel le sel déposé sur le fer est FeCl₂.

8. Récipient selon l'une quelconque des revendications 3 à 7, dans lequel le composé d'halogène hydrolysable dans un solvant protique et/ou ses produits d'addition est/sont déposé(s) sur le métal oxydable à partir d'un liquide essentiellement exempt d'humidité.

9. Récipient selon la revendication 8, dans lequel le liquide essentiellement exempt d'humidité est l'éthanol.

10. Récipient selon la revendication 8, dans lequel AlCl₃ et/ou FeCl₂ sont déposés sur le fer à partir d'une solution dans un alcool choisi dans le groupe constitué de l'éthanol, du méthanol, de l'isopropanol, du butanol et de l'hexanol.

11. Récipient selon la revendication 8, dans lequel le composé d'halogène hydrolysable dans un solvant protique est choisi dans le groupe constitué de AlCl₃, FeCl₂, FeCl₃, TiCl₄, SnCl₄, SiCl₄, POCl₂, SOCl₂, Al(OEt)Cl₂ et n-butyl SnCl₃.

12. Récipient selon l'une quelconque des revendications précédentes, dans lequel le polyester aromatique est choisi dans le groupe constitué de poly(éthylène téréphtalate) et de copolymères de celui-ci dans lequel jusqu'à 10 % en mol d'unités d'acide téréphtalique sont substitués par des unités d'acide isophtalique et/ou d'acides naphtalène-dicarboxyliques.

13. Récipient selon l'une quelconque des revendications précédentes, dans lequel le récipient est une bouteille étirée.

14. Récipient selon l'une quelconque des revendications précédentes, dans lequel la paroi latérale de la bouteille étirée est d'une épaisseur de 280 à 410 µm et présente des valeurs de voile Hunter de 20 % ou inférieures.

15. Récipient selon l'une quelconque des revendications précédentes, dans lequel le récipient n'exhibe pas de reflets visibles après 3 jours d'une absorption accélérée d'oxygène.

16. Récipient selon l'une quelconque des revendications précédentes, dans lequel lesdites particules de métal oxydable sont en fer présentant un diamètre moyen inférieur à 1,0 µm et les compositions à base de fer sont incorporées dans ladite paroi dans une quantité allant jusqu'à 500 parties en poids par partie en millions en poids de polymère.
